# EUROPÄISCHE PATENTSCHRIFT

(11) **EP 1 790 465 B1**
(45) Veröffentlichungstag und Bekanntmachung des Hinweises auf die Patenterteilung: **09.07.2014**
(21) Anmeldenummer: 06024607.1
(22) Anmeldetag: 28.11.2006
(51) Int. Cl.: B30B 5/06, B30B 15/28, F16P 7/02, B27N 3/24, F16P 3/14, G01N 23/16

(54) **Sicherheitseinrichtung für eine kontinuierlich arbeitende Presse bei der Herstellung von Werkstoffplatten**
Safety system in a continuously operating press for the production of fiberboards from wood
Dispositif de sécurité dans une presse à fonctionnement continu pour la fabrication de panneaux en fibre de bois

(30) Priorität: 28.11.2005 DE 102005056696
(43) Veröffentlichungstag der Anmeldung: 30.05.2007
(73) Patentinhaber: Dieffenbacher GmbH Maschinen- und Anlagenbau, 75031 Eppingen (DE)
(72) Erfinder: Von Haas, Gernot, Dr., 69123 Heidelberg (DE)
(74) Vertreter: Hartdegen, Anton

(56) Entgegenhaltungen:
- EP-A1- 1 318 377
- EP-A2- 1 428 652
- DE-A1- 19 622 712
- DE-A1-102005 007 834

## Beschreibung

Die Erfindung betrifft eine Sicherheitseinrichtung für eine kontinuierlich arbeitende Presse bei der Herstellung von Werkstoffplatten.

Insbesondere bei der Herstellung von extrem dünnen Faserplatten und auch bei dünnen Spanplatten, zum Beispiel bei einer Dicke von 2,5 mm, besteht bei der Übergabe der Pressgutmatte (= gestreute Späne-/Fasermatte) auf das untere Stahlband einer kontinuierlich arbeitenden Presse die Gefahr eines Doppelungeffektes. Das heißt, durch das beheizte Stahlband kann die feuchte Pressgutmatte aufgrund einer Dampfdruckbildung zwischen der unteren Pressgutschicht und dem heißen Stahlband durch Gasblasen zu Aufwölbungen mit Staubwolken führen, wodurch, besonders bei den hohen Stahlbandgeschwindigkeiten wie bei der Dünnplattenproduktion üblich, eine Überstülpung der Pressgutmatte auf die doppelte Mattenstärke erfolgen kann, welches im Ergebnis zur Beschädigung bis hin zur Zerstörung des oberen und unteren Stahlbandes führen kann.

Aus DE 196 22 712 A1 ist eine Sicherheitseinrichtung gemäss dem Oberbegriff des Anspruchs 1 bekannt geworden, die mittels im Einlaufspalt einer kontinuierlich arbeitenden Presse eine über die gesamte Breite der einlaufenden Pressgutmatte angebrachtes Drahtseil mit mehreren daran angebrachten in Beschickrichtung auf der Pressgutmatte aufliegenden Schleifdrähten vorgesehen ist, die bei überhöhter Späne- bzw. Faserschüttung an das obere Stahlband drückend Kontakt gebend eine Sicherheitsschaltung auslösen und die kontinuierlich arbeitende Presse stillsetzen. Diese Sicherheitseinrichtung hat den Nachteil, dass die Wartung und die Justage sehr aufwendig sind und bei Produktionsumstellungen mit unterschiedlichen Mattenhöhen und unterschiedlichen Mattenkontaktlinien an dem oberen einlaufenden Stahlband in die kontinuierlich arbeitende Presse häufiger Fehlalarme auftreten. Auch hat sich herausgestellt, dass bei sehr schnell fahrenden Pressgutmatten Reibungsspitzen auftreten können durch die die Schleifdrähte ausreichend stark mitgenommen werden, dass es zu Fehlalarmen kommt.

Neben einer derartigen Sicherheitseinrichtung werden zur Absicherung auch Lichtschranken, eventuell auch Laserstrahlen, eingesetzt, die jedoch zu oft eine Notabschaltung herbeiführen, weil bereits harmlose Ausbläser Effekte, das heißt Staub und/oder Faseraufwirbelungen der Pressgutmatte im Einlaufbereich bei der Verdichtung der Pressgutmatte zu einem Störungsalarm und somit zu einer Produktionsunterbrechung führen können.

Der Erfindung liegt die Aufgabe zugrunde, eine Sicherheitseinrichtung zu schaffen, die eine überhöhte Pressgutmatte z. B. durch Mattendoppelungen wegen eines partiellen Rückstaus im Einlaufbereich einer kontinuierlich arbeitenden Presse erkennt und damit die Stahlbänder vor einer Beschädigung oder Zerstörung schützen kann und gleichzeitig eine hohe Sicherheit gegen unnötige und kostspielige Fehlalarme bietet.

Diese Aufgabe wird mit der Sicherheitseinrichtung nach Anspruch 1 gelöst.

Mit der erfindungsgemäßen Lösung werden zuverlässig Mattendoppelungen direkt im Einlaufbereich einer kontinuierlich arbeitenden Presse vermieden, da fokussierte Röntgenstrahlen wegen ihres hohen Durchdringungsvermögens durch auftretende Staubentwicklung fast nicht absorbiert werden. Damit ist sichergestellt, dass bei einer Doppelung der Pressgutmatte im Presseneinlauf, also einem Rückstau von Pressgutmattenteilen und deren Übereinanderschichtung, die Röntgenstrahlung stark genug absorbiert wird, dass ein Alarm zur Stillsetzung und/oder zur Einlaufspalt- bzw.

Pressspaltöffnung schnell genug ausgelöst werden kann.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: In schematischer Darstellung die Seitenansicht eines Einlaufbereiches einer kontinuierlich arbeitenden Presse mit der erfindungsgemäßen Anordnung der Sicherheitseinrichtung und
- Figur 2: den Einlaufbereich nach Figur 1 in Draufsicht.

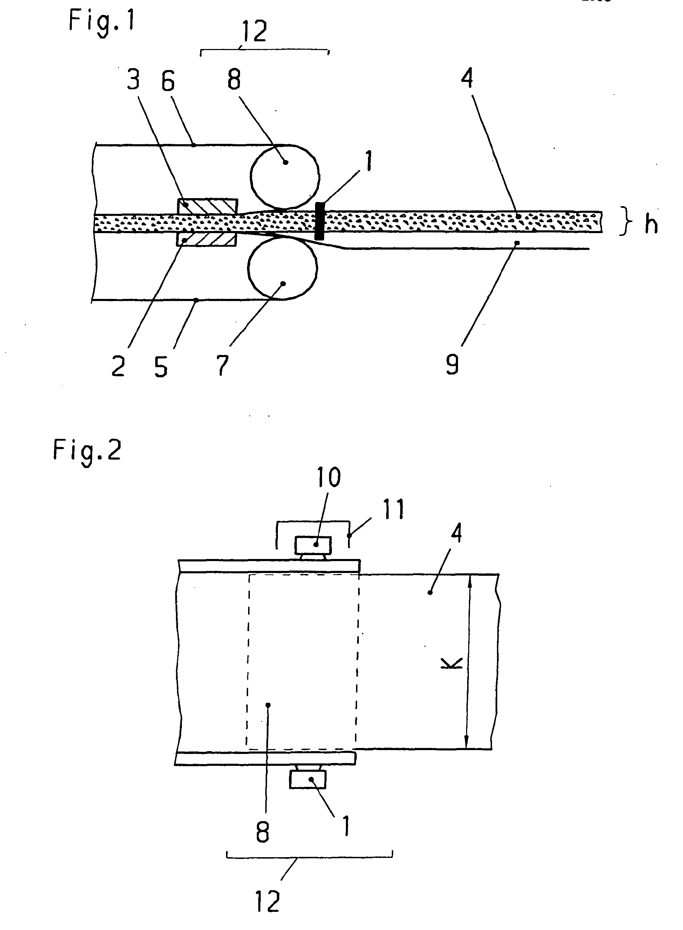

Zum besseren Verständnis der Sicherheitseinrichtung gemäß der Erfindung zeigt die Figur 1 den vorderen Teil bzw. den Einlaufbereich einer kontinuierlich arbeitenden Presse. Die kontinuierlich arbeitende Presse besteht dabei aus dem festen Presstisch 2 und den Pressspalt mittels hydraulischer Stellglieder (nicht dargestellt) einstellenden vertikal beweglichen Pressbär 3. Weiter besteht die kontinuierlich arbeitende Presse aus den Pressdruck übertragenden sowie die Pressgutmatte 4 durch die kontinuierlich arbeitende Presse ziehenden flexiblen endlosen Stahlbändern 5 und 6, die über Umlenktrommeln 7 und 8 um den Presstisch 2 und Pressbär 3 geführt sind. Als Reibungsmindernde Stützelemente können zwischen den Stahlbändern 5 und 6 sowie den dabei als Widerlager dienenden Presstisch 2 und dem beweglichen Pressbär 3 Rollstangen oder ähnliche Wälzkörper (nicht dargestellt) mit umlaufen. Die zum Beispiel zu Span- oder Faserplatten in der kontinuierlich arbeitenden Presse zu verpressende Pressgutmatte 4 wird mit der Beschickeinrichtung 9 in den Einlaufbereich 12 geführt und auf das untere Stahlband 5 übergeben. Die Sicherheitseinrichtung besteht dabei aus einem Strahlungssender 1 mit einem Strahlungsempfänger 10, die seitlich des Einlaufbereiches 12 so angeordnet sind, dass die Strahlung über die gesamte Breite k den normalerweise freien Bereich zwischen der oberen Deckschicht der Pressgutmatte 4 und dem oberen Stahlband 6 überwachen kann. Der Strahlungssender 1 mit Strahlungsempfänger 10 kann zusätzlich auch zur Durchstrahlung der gesamten Breite k sowie der Höhe h der einlaufenden Pressgutmatte 4 zur Feststellung von Fremdkörpern in der Matte, zum Beispiel Metallteilen, Staub- oder Leimklumpen, benutzt werden Vorzugsweise wird als Strahlungssender 1 ein fokussierter Röntgenstrahler und als Strahlungsempfänger 10 ein Röntgendetektor mit einer Auswerteelektronik Verwendung finden. Natürlich sind aber auch andere Strahlungen zur Verwendung geeignet, die sich nicht durch Staubwolken oder ähnlichem zu leicht ablenken lassen. Der Strahlungssender 1 mit dem zugehörigen Strahlungsempfänger 10 ist zur Einstellung der verschiedenen Produktionsmodi in der vertikalen und horizontalen bewegbar angeordnet. Von Vorteil ist natürlich eine kombinierte Verwendung von zwei Strahlungssendern 1 mit Strahlungsempfängern 10 für den Bereich oberhalb der Pressgutmatte 4 und für die Pressgutmatte 4 selbst. Je nach Produktionsgeschwindigkeit und der Dicke der Pressgutmatte 4 verstellt sich der Mattenkontaktpunkt der Pressgutmatte 4 mit dem oberen Stahlband 6. Dennoch sollte der Strahlungssender 1 mit Strahlungsempfänger 10 je nach Lage des Kontaktes der Pressgutmatte 4 mit dem oberen Stahlband 6 50 mm bis 300 mm vor dem Mattenkontakt während des Betriebes angeordnet sein. Den geltenden Vorschriften entsprechend muss natürlich die Sicherheitseinrichtung bei Verwendung Gesundheitsgefährdender Strahlung mittels eines Sicherheitsbereiches 11 vor Ungefugtem Zutritt gesichert sein.

### Bezugszeichenliste: DP 1316 EP

- 1.: Strahlungssender
- 2.: Presstisch
- 3.: Pressbär
- 4.: Pressgutmatte
- 5.: Stahlband unten
- 6.: Stahlband oben
- 7.: Umlenktrommel unten
- 8.: Umlenktrommel oben
- 9.: Beschickeinrichtung
- 10.: Empfangseinrichtung
- 11.: Sicherheitsbereich
- 12.: Einlaufbereich

- K: Breite
- H: Höhe

## Patentansprüche

1. Sicherheitseinrichtung für eine kontinuierlich arbeitende Presse bei der Herstellung von Werkstoffplatten, wie Spanplatten, Faserplatten und ähnlichen Holzwerkstoffplatten sowie Kunststoffplatten, mit einer kontinuierlich arbeitenden Presse bestehend aus dem Pressdruck übertragenden sowie das Pressgut durch die Presse ziehenden, flexiblen zwei endlosen Stahlbändern (5,6), die über Antriebstrommeln und Umlenktrommeln um einen Presstisch (2) bzw. Pressbär (3) geführt sind und die sich mit einstellbarem Pressspalt über mit umlaufende rollende Stützelemente gegen Widerlager von Presstisch (2) und Pressbär (3) abstützen und bei der das Pressgut über eine Beschickeinrichtung (9) im Einlaufspalt auf das untere Stahlband (5) übergeben wird, wobei seitlich des Einlaufbereiches (12) einer kontinuierlich arbeitenden Presse ein über die gesamte Breite (k) reichender Strahlungssender (1) mit einem gegenüberliegendem Strahlungsempfänger (10) zur Überwachung des Bereiches zwischen der oberen Fläche der Pressgutmatte (4) und dem oberen Stahlband (6) angeordnet ist, **dadurch gekennzeichnet, dass** als Strahlungssender (1) ein fokussierter Röntgenstrahler und als Strahlungsempfänger (10) ein Röntgendetektor mit einer Auswertelektronik angeordnet ist.

2. Sicherheitseinrichtung nach Anspruch 1, **dadurch gekennzeichnet, dass** der Strahlungssender (1) mit Strahlungsempfänger (10) zur Durchstrahlung der gesamte Breite (k) sowie der Höhe (h) der einlaufenden Pressgutmatte (4) angeordnet ist.

3. Sicherheitseinrichtung nach den Ansprüchen 1 bis 2, **dadurch gekennzeichnet, dass** der Strahlungssender (1) mit dem zugehörigen Strahlungsempfänger (10) in der vertikalen und horizontalen bewegbar angeordnet ist.

4. Sicherheitseinrichtung nach den Ansprüchen 1 und 2, **dadurch gekennzeichnet, dass** der Strahlungssender (1) mit Strahlungsempfänger (10) für den Bereich oberhalb der Pressgutmatte (4) und eine Strahlungssender (1) mit Strahlungsempfänger (10) für die Pressgutmatte (4) selbst angeordnet ist.

5. Sicherheitseinrichtung nach einem oder mehreren der vorherigen Ansprüche, **dadurch gekennzeichnet, dass** der Strahlungssender (1) mit Strahlungsempfänger (10) je nach Lage des Kontaktes der Pressgutmatte (4) mit dem oberen Stahlband (6) 50 mm bis 300 mm vor dem Mattenkontakt angeordnet ist.

## Claims

1. A safety device for a continuously operating press in the production of material boards such as chipboards, fiberboards and similar wood material boards, as well as plastic panels, comprising a continuously operating press consisting of two flexible endless steel belts (5, 6) which transmit the pressing pressure and pull the press material through the press, and which are guided via driving drums and tail drums about a press table (2) or press ram (3) and which are supported with adjustable press gap via entrained rolling support elements against abutments of the press table (2) and press ram (3), and in which the press material is transferred via a feed device (9) in the inlet gap to the bottom steel belt (5), wherein laterally to the inlet region (12) of a continuously working press a radiation transmitter (1) reaching over the entire width (k) is arranged with an opposite radiation receiver (10) for monitoring the region between the upper surface of the press material mat (4) and the upper steel belt (6), **characterized in that** a focused X-ray emitter is arranged as a radiation transmitter (1) and an X-ray detector with evaluation electronics is arranged as a radiation receiver (10).

2. A safety device according to claim 1, **characterized in that** the radiation transmitter (1) with radiation receiver (10) is arranged for radiating through the entire width (k) and height (h) of the incoming press material mat (4).

3. A safety device according to claims 1 to 2, **characterized in that** the radiation transmitter (1) with the associated radiation receiver (10) is movably arranged in the vertical and horizontal.

4. A safety device according to claims 1 and 2, **characterized in that** the radiation transmitter (1) with the radiation receiver (10) is arranged for the region above the press material mat (4) and a radiation transmitter with radiation receiver (10) is arranged for the press material mat (4) itself.

5. A safety device according to one or several of the preceding claims, **characterized in that** the radiation transmitter (1) with radiation receiver (10) is arranged 50 mm to 300 mm before the mat contact depending on the position of the contact of the press material mat (4) with the upper steel belt (6).

## Revendications

1. Dispositif de sécurité pour une presse fonctionnant en continu pour la fabrication de panneaux de matériau tels que des panneaux de particules, panneaux de fibres et autres panneaux de matériau à base de bois et de panneaux de matière plastique, avec une presse fonctionnant en continu composée de deux bandes d'acier flexibles sans fin (5, 6) transmettant la pression de pressage et tirant la matière à presser à travers la presse, qui sont guidées sur des tambours d'entraînement et des tambours de renvoi autour d'une table de presse (2) et d'un mouton de presse (3) et qui s'appuient avec une fente de pressage réglable sur des éléments d'appui roulants tournant en continu contre des contre-appuis du plateau de presse (2) et du mouton de presse (3), et dans lequel la matière à presser est déposée par un dispositif de chargement (9) dans la fente d'entrée sur la bande d'acier inférieure (5), un émetteur de rayonnement (1) dont la portée couvre toute la largeur (k) étant disposé sur le côté de la zone d'entrée (12) d'une presse fonctionnant en continu avec un récepteur de rayonnement (10) lui faisant face pour surveiller la zone entre la surface supérieure de la nappe de matière à presser (4) et la bande d'acier supérieure (6), **caractérisé en ce que** l'émetteur de rayonnement (1) est un émetteur de rayons X focalisé et le récepteur de rayonnement (10) est un détecteur de rayons X avec une électronique d'analyse.

2. Dispositif de sécurité selon la revendication 1, **caractérisé en ce que** l'émetteur de rayonnement (1) est disposé avec le récepteur de rayonnement (10) de façon à balayer de ses rayons toute la largeur (k) et la hauteur (h) de la nappe de matière à presser (4) à l'entrée.

3. Dispositif de sécurité selon les revendications 1 à 2, **caractérisé en ce que** l'émetteur de rayonnement (1) est disposé avec le récepteur de rayonnement (10) correspondant de façon mobile à la verticale et à l'horizontale.

4. Dispositif de sécurité selon les revendications 1 et 2, **caractérisé en ce que** l'émetteur de rayonnement (1) avec le récepteur de rayonnement (10) est disposé au-dessus de la nappe de matière à presser (4) et un émetteur de rayonnement (1) avec récepteur de rayonnement (10) est disposé pour la nappe de matière à presser (4) elle-même.

5. Dispositif de sécurité selon une ou plusieurs des revendications précédentes, **caractérisé en ce que** l'émetteur de rayonnement (1) avec le récepteur de rayonnement (10) est disposé, selon la position du contact de la nappe de matière à presser (4) avec la bande d'acier supérieure (6), entre 50 mm et 300 mm devant le contact de la nappe.
